# EUROPÄISCHE PATENTANMELDUNG

(11) **EP 1 741 864 A2**
(43) Veröffentlichungstag der Anmeldung: **10.01.2007**
(21) Anmeldenummer: 06013337.8
(22) Anmeldetag: 28.06.2006
(51) Int. Cl.: E05F 1/10, F16F 9/38, F16F 9/56

(54) **Stufenlos blockierbare Verstelleinrichtung**

(30) Priorität: 05.07.2005 DE 102005031671
(71) Anmelder: Stabilus GmbH, 56070 Koblenz (DE)
(72) Erfinder: Kohns, Peter, 56179 Vallendar (DE); Mintgen, Rolf, 56743 Thuer (DE); Schwab, Mario, 56077 Koblenz (DE); Schwab, Wilhelm, 56564 Neuwied (DE)
(74) Vertreter: Klein, Thomas

(57) **Zusammenfassung**

Die Erfindung bezieht sich auf eine stufenlos blockierbare Verstelleinrichtung 1 zum Feststellen zweier relativ zueinander bewegbarer Bauelemente 6, 7, insbesondere einer relativ zu einer Karosserie eines Kraftfahrzeuges bewegbaren Tür oder Klappe des Kraftfahrzeuges, mit einer einen Zylinder 3 und einen in dem Zylinder axial verschiebbaren, eine aus dem Zylinder herausgeführte Kolbenstange 5 aufweisenden Kolben besitzenden Kolbenzylindereinheit 2, wobei die Kolbenzylindereinheit ein kolbenstangenseitiges Anschlußelement 10 zur Verbindung mit einem ersten der Bauelemente 6 und ein zylinderseitiges Anschlußelement 11 zur Verbindung mit dem zweiten der Bauelemente 7 aufweist. Zur Senkung der Herstellkosten und Verbesserung des Kraftflusses wird vorgeschlagen, daß eine die Kolbenzylindereinheit 2 axial zumindest teilweise übergreifende Konsole 12 vorgesehen ist und daß die Konsole 12 in einem ersten Konsolenendbereich 13 an einem der beiden Bauelemente befestigbar und in einem dem ersten Konsolenendbereich 13 abgewandten zweiten Konsolenendbereich 15 an das kolbenstangenseitige Anschlußelement oder das zylinderseitige Anschlußelement 11 der Kolbenzylindereinheit 2 angebunden ist.

## Beschreibung

Die Erfindung bezieht sich auf eine stufenlos blockierbare Verstelleinrichtung zum Feststellen zweier relativ zueinander bewegbarer Bauelemente, insbesondere einer relativ zu einer Karosserie eines Kraftfahrzeuges bewegbaren Tür oder Klappe des Kraftfahrzeuges, mit einer einen Zylinder und einen in dem Zylinder axial verschiebbaren, eine aus dem Zylinder herausgeführte Kolbenstange aufweisenden Kolben besitzenden Kolbenzylindereinheit, wobei die Kolbenzylindereinheit ein kolbenstangenseitiges Anschlußelement zur Verbindung mit einem ersten der Bauelemente und ein zylinderseitiges Anschlußelement zur Verbindung mit dem zweiten der Bauelemente aufweist.

Eine derartige Verstelleinrichtung ist beispielsweise als Stellvorrichtung für eine Tür eines Kraftfahrzeuges bekannt. Die Stellvorrichtung ist an einer Türsäule der Karosserie des Kraftfahrzeuges schwenkbeweglich angelenkt und umfaßt eine zwischen der Türsäule und der Tür angeordnete Kolbenzylindereinheit. Die Tür ist mithilfe eines Scharnieres an der Türsäule angebracht, wobei eine Kolbenstange der Kolbenzylindereinheit mit dem Scharnier verbunden ist. Ferner umfaßt die Stellvorrichtung ein den Fluß eines Druckmediums in einem Kolben der Kolbenzylindereinheit steuerndes Blockierventil. Über Stellmittel wird das Blockierventil über einen Türgriff derart angesteuert, daß die Tür in mindestens einer Zwischenstellung blockierbar ist. Die Stellvorrichtung ist aufwendig in der Herstellung und führt zu einer hohen Belastung des Scharnieres der Tür.
Darüber hinaus ist eine als stufenlos blockierbare Stelleinrichtung verwendbare hydropneumatische Feder mit einer Kolbenzylindereinheit bekannt. Diese Stelleinrichtung kann zum Einstellen einer Tür eines Kraftfahrzeuges in eine gewünschte Öffnungsstellung verwendet werden. Um eine Einstellung vorzunehmen, wird ein Absperrventil in der Feder geöffnet; ist die gewünschte Einstellung erreicht, wird das Absperrventil wieder geschlossen, so daß die Tür festgestellt ist. Die Stelleinrichtung ist einerseits auf einem mit einer Karosserie des Kraftfahrzeuges verbundenen Lagerbolzen schwenkbar befestigt; andererseits bildet ein mit der Tür fest verbundener Lagerbolzen ein Schwenklager für die Stelleinrichtung. Die Tür ist mittels eines Türscharnieres in der Karosserie gelagert. An der Lagerung der Tür können hohe, von der Stelleinrichtung verursachte Kräfte auftreten.

Der vorliegenden Erfindung liegt die Aufgabe zugrunde, eine Verstelleinrichtung der eingangs genannten Art zu schaffen, die reduzierte Herstellkosten aufweist und einen verbesserten Kraftfluß ermöglicht.
Diese Aufgabe wird erfindungsgemäß gelöst, daß eine die Kolbenzylindereinheit axial zumindest teilweise übergreifende Konsole vorgesehen ist und bei der die Konsole in einem ersten Konsolenendbereich an einem der beiden Bauelemente befestigbar und in einem dem ersten Konsolenendbereich abgewandten zweiten Konsolenendbereich an das kolbenstangenseitige Anschlußelement oder das zylinderseitige Anschlußelement der Kolbenzylindereinheit angebunden ist.

Vorteilhaft wird bei der Erfindung die Kolbenzylindereinheit, bei der es sich vorzugsweise um eine hydropneumatische Feder handelt, über die Konsole an einem der beiden relativ zueinander bewegbaren Bauelemente, insbesondere einer Tür eines Kraftfahrzeuges, abgestützt, so daß eine gezielte und gleichmäßig verteilte Krafteinleitung in dieses Bauelement mittels der Konsole erfolgen kann; von großem Vorteil ist die auf diese Weise ermöglichte großflächige Abstützung der Kolbenzylindereinheit, wodurch eine Verstärkung - zum Beispiel unter Einsatz zusätzlich eingeschweißter Bleche - des vorgenannten Bauelementes entbehrlich ist. Dadurch ergibt sich nicht nur eine vorteilhafte Gewichtsreduzierung, sondern auch eine Verringerung des Fertigungsaufwandes. Mit dem anderen der beiden relativ zueinander bewegbaren Bauelement, vorzugsweise dem steiferen der Bauelemente, insbesondere einer Karosserie des Kraftfahrzeuges, kann die Kolbenzylindereinheit vorzugsweise direkt und unmittelbar verbunden sein. Von besonderem Vorteil ist bei der erfindungsgemäßen Verstelleinrichtung, daß bei einer Änderung in den Abmessungen, insbesondere einer Längenänderung, der Kolbenzylindereinheit, beispielsweise verursacht durch eine Verwendung eines größeren Zylinders, lediglich eine andere, an die geänderten Abmessungen angepaßte Konsole vorgesehen werden muß; es ist nicht erforderlich, Änderungen an den relativ zueinander bewegbaren Bauelementen vorzunehmen. Umgekehrt können auch gegebenenfalls erforderliche Änderungen an den relativ zueinander bewegbaren Bauelementen durch eine Anpassung der Konsole ausgeglichen werden, ohne daß aufwendige konstruktive Änderungen an der Kolbenzylindereinheit erfolgen müssen. Die Konsole übergreift die Kolbenzylindereinheit zumindest teilweise, und zwar axial, das heißt in einer Richtung parallel zu der Mittelachse der Kolbenzylindereinheit; das Übergreifen der Kolbenzylindereinheit durch die Konsole erfolgt somit in Längsrichtung der Kolbenzylindereinheit.

Man könnte sich vorstellen, daß die Konsole zum Beispiel stabförmig, beispielsweise im wesentlichen aus einem U-Profil bestehend oder allgemein in Form eines beliebigen Tragprofiles, aufgebaut ist. Auch könnte die Konsole, zum Beispiel zu Dämpfungszwecken, eine gewisse Elastizität aufweisen. Insbesondere für eine gleichmäßige Kraftverteilung und einen besonders präzisen Kraftfluß ist es hingegen von Vorteil, wenn gemäß einer Weiterbildung der Erfindung die Konsole einen starren, die Kolbenzylindereinheit zumindest teilweise umgreifenden Hohlkörper aufweist. Das Umgreifen der Kolbenzylindereinheit durch den Hohlkörper erfolgt dabei über den Umfang der Kolbenzylindereinheit, insbesondere über den Umfang des Zylinders der Kolbenzylindereinheit. Vorzugsweise fallen die Mittelachse der Kolbenzylindereinheit und die Mittelachse des Hohlkörpers zusammen.

Vorteilhaft bietet die Konsole zusätzlich einen guten Schutz insbesondere der Kolbenzylindereinheit vor Umwelteinflüssen, insbesondere vor Staub und Feuchtigkeit, wenn gemäß einer anderen Weiterbildung der Erfindung der Hohlkörper als Topf ausgebildet ist und der zweite Konsolenendbereich den Boden des Topfes umfaßt. Die Konsole ist dabei am Boden des Topfes an das korrespondierende Anschlußelement der Kolbenzylindereinheit angeschlossen.

Gemäß einer anderen vorteilhaften Weiterbildung der Erfindung weist der Hohlkörper einen sich ausgehend von dem zweiten Konsolenendbereich zu dem ersten Konsolenendbereich hin erweiternden Konus auf, wodurch der Kraftfluß von der Kolbenzylindereinheit zu dem Bauelement, an dem die Konsole befestigbar ist, sowie die Stützwirkung der Konsole weiter verbessert werden können.
Sehr kostengünstig auch in großen Stückzahlen ist die Konsole herstellbar, wenn gemäß einer anderen vorteilhaften Weiterbildung der Erfindung die Konsole aus einem Kunststoff besteht. Vorzugsweise besteht die Konsole ausschließlich aus dem Kunststoff, aber es ist grundsätzlich auch denkbar, partiell, zum Beispiel in einem Konsolenendbereich, versteifende Einlegeteile, beispielsweise aus Metall, vorzusehen.

Gemäß einer anderen vorteilhaften Weiterbildung der Erfindung ist in dem ersten Konsolenendbereich eine Verbindungseinrichtung für eine Schraubbefestigung der Konsole vorgesehen, wodurch eine einfache Befestigung der Konsole an dem dafür vorgesehenen der beiden Bauelemente ermöglicht ist. Die Verbindungseinrichtung kann in einfachster Weise eine Durchgangsausnehmung zur Aufnahme einer Schraube aufweisen.

Insbesondere eine Änderung der Winkellage der Verstelleinrichtung im Falle einer Verschwenkung der relativ zueinander bewegbaren Bauelemente läßt sich vorteilhaft einfach und betriebssicher ausgleichen, wenn gemäß einer anderen vorteilhaften Weiterbildung der Erfindung das die Konsole anbindende Anschlußelement der Kolbenzylindereinheit ein Kugelelement aufweist, das zudem als Toleranzausgleich dienen kann. Dabei kann mit einem Übermaß im Durchmesser des Kugeleiementes vorteilhaft eine Spielfreiheit des Kugelelementes in einer Lagerung des Kugelelementes über die gesamte Lebensdauer der Verstelleinrichtung erreicht werden.

Dabei kann gemäß einer vorteilhaften Weiterbildung der Erfindung eine besonders zuverlässige Lagerung dadurch erreicht werden, daß in dem zweiten Konsolenendbereich eine das Kugelelement lagernde kalottenförmige Ausnehmung vorgesehen ist.

Gemäß einer anderen vorteilhaften Weiterbildung der Erfindung ist der zweite Konsolenendbereich mit einem das Kugelelement abdeckenden Deckel verbunden, wodurch die Verstelleinrichtung und insbesondere das Kugelelement zusätzlich gegen unerwünschte Umwelteinflüsse wie zum Beispiel Verschmutzungen geschützt werden kann. Der Deckel kann zum Beispiel auf den zweiten Konsolenendbereich aufgeschraubt oder mit separaten Schrauben oder einer Ringschnappverbindung an diesem befestigt sein, oder er kann beispielsweise mit dem zweiten Konsolenendbereich mittels einer Ultraschall- oder einer Laserschweißung verschweißt sein.

Eine weiter verbesserte Lagerung des Kugelelementes kann vorteilhaft dadurch erreicht werden, daß gemäß einer Weiterbildung der Erfindung der Deckel eine das Kugelelement lagernde kalottenförmige Ausnehmung aufweist. Das Kugelelement wird mithilfe des Deckels vorzugsweise spielfrei gelagert.

Gemäß einer anderen vorteilhaften Weiterbildung der Erfindung wird eine einfache und dennoch sichere Anordnung des Kugelelementes dadurch erreicht, daß das die Konsole anbindende Anschlußelement einen axial ausgerichteten Gewindebolzen aufweist und daß das Kugelelement mit dem Gewindebolzen verschraubt ist. Der Gewindebolzen ist vorzugsweise an den Zylinder der Kolbenzylindereinheit angeschweißt.

Eine besonders präzise Lagerung des Kugelelementes kann vorteilhaft dadurch erreicht werden, daß gemäß einer anderen Weiterbildung der Erfindung das die Konsole anbindende Anschlußelement ein Gelenkauge aufweist und daß das Kugelelement in dem Gelenkauge angeordnet ist.

Gemäß einer vorteilhaften Weiterbildung der Erfindung wird dabei die Lagerung des Kugelelementes weiter verbessert, wenn das Gelenkauge eine Lagerbuchse zur Lagerung des Kugelelementes aufweist.

Die Montage der Verstelleinrichtung wird zusätzlich vereinfacht, wenn gemäß einer vorteilhaften Weiterbildung der Erfindung das Kugelelement mittels eines Klipsbauteiles in dem Gelenkauge befestigt ist. Das Klipsbauteil und die Lagerbuchse können ein einziges Bauteil bildend miteinander verbunden sein.

Gemäß einer vorteilhaften Weiterbildung der Erfindung ist ein dauerhaft präziser Kraftfluß bei gleichzeitig eine hohe Betriebssicherheit aufweisendem Aufbau der Verstelleinrichtung dadurch zu erreichen, daß der Gewindebolzen oder das Gelenkauge den zweiten Konsolenendbereich zentrisch durchgreift. Beispielsweise wird bei der Herstellung der Verstelleinrichtung die Kolbenzylindereinheit in die Konsole eingeschoben, wobei der Gewindebolzen oder das Gelenkauge den zweiten Konsolenendbereich durchgreift. Bei Erreichen der Endposition der Kolbenzylindereinheit in der Konsole ist das Kugelelement auf den Gewindebolzen aufschraubbar oder in das Gelenkauge einsetzbar. Nach dem Aufschrauben oder Einsetzen des Kugelelementes kann die Kolbenzylindereinheit in einen Kugelsitz gezogen und die Konsole mit dem Deckel verschlossen werden.

Eine besonders hohe Funktionalität weist die Verstelleinrichtung auf, wenn gemäß einer anderen vorteilhaften Weiterbildung der Erfindung der erste Konsolenendbereich an einer Stirnseite einer Tür eines Kraftfahrzeuges befestigbar ist, der zweite Konsolenendbereich an das zylinderseitige Anschlußelement der Kolbenzylindereinheit angebunden ist und das kolbenstangenseitige Anschlußelement der Kolbenzylindereinheit mit der Karosserie des Kraftfahrzeuges verbindbar ist, wobei die Kolbenstange die Stirnseite der Tür durchgreift. Ist die Tür mithilfe von zwei Scharnieren an der Karosserie angebracht, so ist die Verstelleinrichtung für einen gleichförmigen Kraftfluß vorzugsweise mittig zwischen den Scharnieren anordnenbar. Vorzugsweise ist die Verstelleinrichtung in der Tür in etwa in Längsrichtung des Kraftfahrzeuges anordnenbar. Das kolbenstangenseitige Anschlußelement der Kolbenzylindereinheit ist für eine Momentenübertragung vorteilhaft in einem Abstand zu einer Scharnierachse der Tür, um welche die Tür gegenüber der Karosserie verschwenkbar ist, mit der Karosserie verbindbar und an dieser abstützbar.

Ausführungsbeispiele der Erfindung sind in der Zeichnung schematisiert dargestellt und werden im folgenden näher erläutert. Es zeigen
- Figur 1:: eine erste Verstelleinrichtung in geschnittener perspektivischer Ansicht,
- Figur 2:: die Verstelleinrichtung nach Figur 1 in geschnittener Seitenansicht,
- Figur 3:: ein Detail der Verstelleinrichtung nach Figuren 1, 2,
- Figur 4:: eine zweite Verstelleinrichtung in geschnittener perspektivischer Ansicht,
- Figur 5:: die Verstelleinrichtung nach Figur 4 in geschnittener Seitenansicht,
- Figur 6:: ein Detail der Verstelleinrichtung nach Figuren 4, 5,
- Figur 7:: eine weitere Verstelleinrichtung in geschnittener Seitenansicht und
- Figur 8:: ein Detail der Verstelleinrichtung nach Figur 7.

Sich jeweils entsprechende Elemente sind in allen Figuren mit gleichen Bezugszeichen versehen.

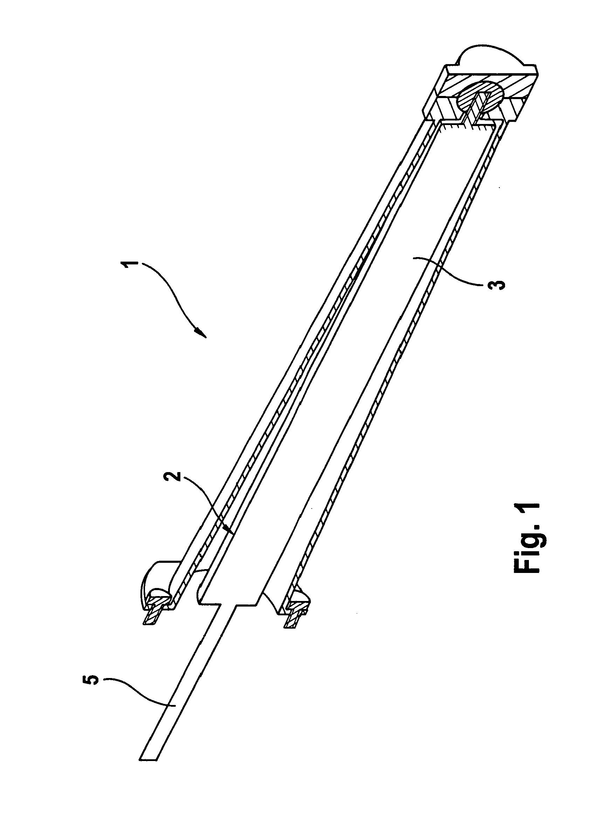

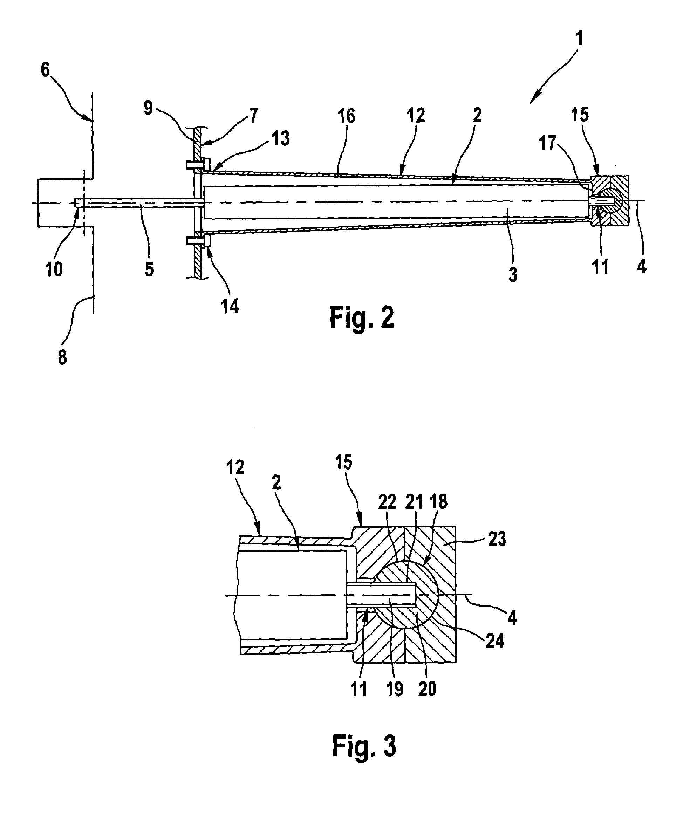

Figur 1 zeigt eine stufenlos blockierbare Verstelleinrichtung 1 mit einer Kolbenzylindereinheit 2, die einen Zylinder 3 und einen in dem Zylinder 3 axial, das heißt in Richtung der Mittelachse 4 (siehe Figur 2) der Kolbenzylindereinheit 2, verschiebbaren, eine aus dem Zylinder 3 herausgeführte Kolbenstange 5 aufweisenden Kolben besitzt. Die Verstelleinrichtung 1 dient einem Feststellen zweier relativ zueinander bewegbarer Bauelemente 6, 7, die in Figur 2 dargestellt sind. Von diesen relativ zueinander bewegbaren Bauelementen 6, 7 ist im vorliegenden Ausführungsbeispiel ein erstes Bauelement 6 eine hier nur in einem Abschnitt gezeigte Karosserie 8 eines Kraftfahrzeuges, und das zweite Bauelement 7 ist eine ebenfalls nur in einem Abschnitt gezeigte Tür 9 des Kraftfahrzeuges. Die Tür 9 ist gegenüber der Karosserie 8 um eine nicht dargestellte Schwenkachse verschwenkbar.

Die Kolbenzylindereinheit 2 weist ein kolbenstangenseitiges Anschlußelement 10 zur Verbindung mit der Karosserie 8 und ein zylinderseitiges Anschlußelement 11 zur Verbindung mit der Tür 9 auf. Es ist ferner eine die Kolbenzylindereinheit 2 axial teilweise übergreifende Konsole 12 vorgesehen. Die Konsole 12 ist in einem ersten Konsolenendbereich 13 mittels einer Schraubverbindung 14 an der Tür 9 befestigt. In einem dem ersten Konsolenendbereich abgewandten zweiten Konsolenendbereich 15 ist die Konsole 12 an das zylinderseitige Anschlußelement 11 der Kolbenzylindereinheit 2 angebunden. Die Konsole 12 verbindet somit das zylinderseitige Anschlußelement 11 mit dem zweiten Bauelement 7 der zueinander bewegbaren Bauelemente 6, 7.

Die Konsole 12, die einstückig ausgebildet ist und aus einem Kunststoff besteht, weist einen starren, die Kolbenzylindereinheit 2 über ihren Umfang vollständig umgreifenden Hohlkörper 16 auf. Der Hohlkörper 16, der einen sich ausgehend von dem zweiten Konsolenendbereich 15 zu dem ersten Konsolenendbereich 13 hin erweiternden Konus aufweist, ist als Topf ausgebildet, wobei der zweite Konsolenendbereich 15 den Boden 17 des Topfes umfaßt. Der geschlossene Hohlkörper 16 sorgt für eine sichere und zuverlässige Trennung von Feucht- und Trockenraum in der Tür 9, so daß das Innere der Tür 9 gegen Eindringen von Feuchtigkeit und Schmutz geschützt ist.

Insbesondere in der vergrößerten Darstellung der Figur 3 ist zu erkennen, daß das die Konsole 12 anbindende Anschlußelement 11 der Kolbenzylindereinheit 2, welches in diesem Beispiel das zylinderseitige Anschlußelement 11 ist, ein Kugelelement 18 aufweist. Ferner weist das die Konsole 12 anbindenden Anschlußelement 11 der Kolbenzylindereinheit 2 einen axial, mithin in Richtung der Mittelachse 4 der Kolbenzylindereinheit 2, ausgerichteten Gewindebolzen 19 auf, wobei das Kugelelement 18, das hier als Kugel 20 mit einer sacklochförmigen, ein Innengewinde aufweisenden Ausnehmung 21 ausgebildet ist, mit dem Gewindebolzen 19 verschraubt ist.

In dem zweiten Konsolenendbereich 15 ist eine das Kugelelement 18 lagernde kalottenförmige Ausnehmung 22 vorgesehen. Der zweite Konsolenendbereich 15 ist zudem mit einem das Kugelelement 18 abdeckenden Deckel 23 verbunden, welcher Deckel 23 eine das Kugelelement 18 lagernde kalottenförmige Ausnehmung 24 aufweist.

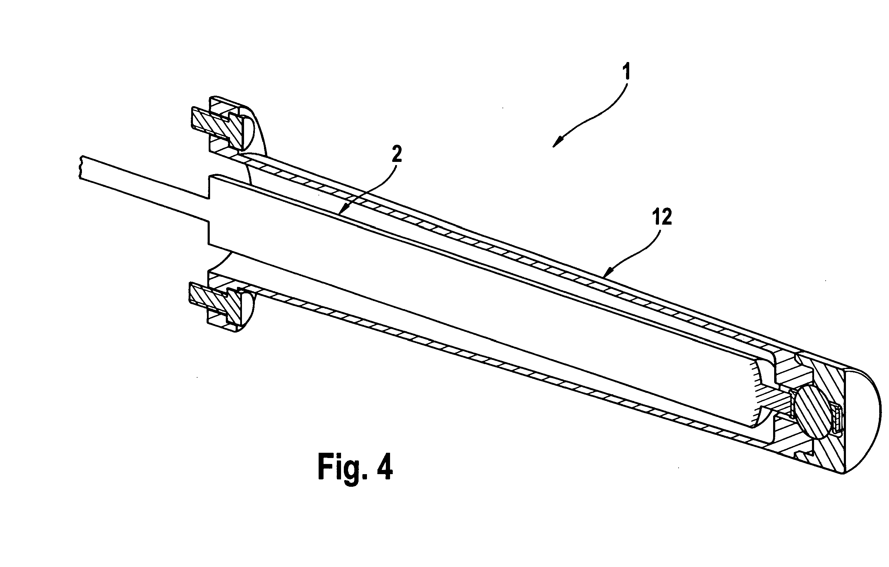

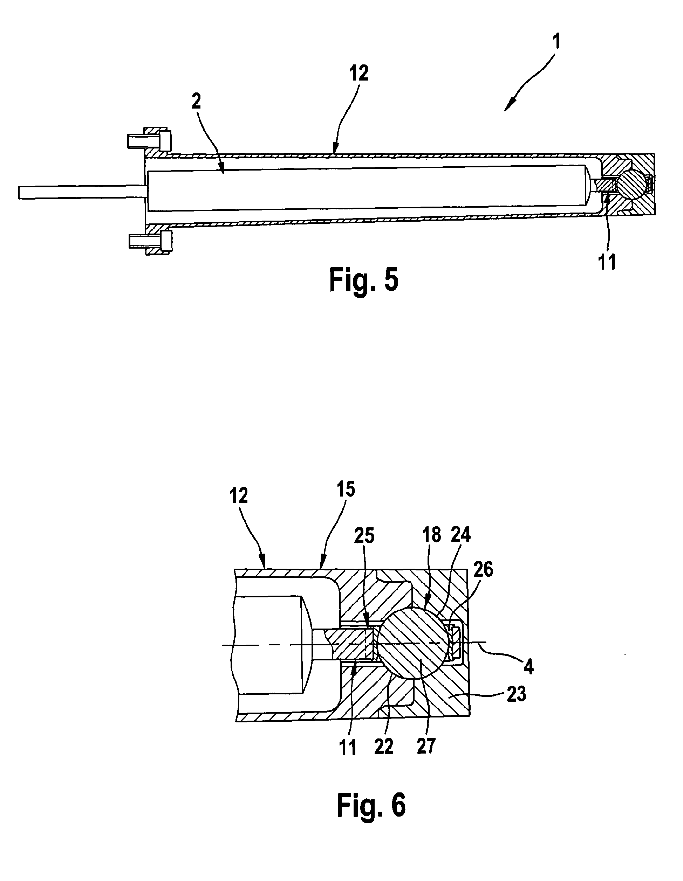

Eine der in Figuren 1 bis 3 dargestellten Verstelleinrichtung 1 ähnliche Verstelleinrichtung 1 mit einer Kolbenzylindereinheit 2 und einer Konsole 12 ist in den Figuren 4 bis 6 in mit den Figuren 1 bis 3 korrespondierenden Ansichten gezeigt. Im Unterschied zu dem ersten Ausführungsbeispiel weist ein zylinderseitiges Anschlußelement 11 der Kolbenzylindereinheit 2, welches Anschlußelement 11 die Konsole 12 an die Kolbenzylindereinheit 2 anbindet, bei dem Ausführungsbeispiel nach Figuren 4 bis 6 ein Gelenkauge 25 auf.

In dem Gelenkauge 25 ist ein Kugelelement 18 angeordnet. Zur Lagerung des Kugelelementes 18 ist das Gelenkauge 25 mit einer als Klipsbauteil ausgebildeten Lagerbuchse 26 versehen. Die Lagerbuchse 26 ist in das Gelenkauge 25 eingeklipst und haltert das Kugelelement 18. Weiterhin ist das Kugelelement 18, das als Vollkugel 27 ausgebildet ist, in einer kalottenförmigen Ausnehmung 22 eines Konsolenendbereiches 15 und in einer kalottenförmigen Ausnehmung 24 eines auf dem vorgenannten Konsolenendbereich 15 angebrachten Deckels 23 gelagert.

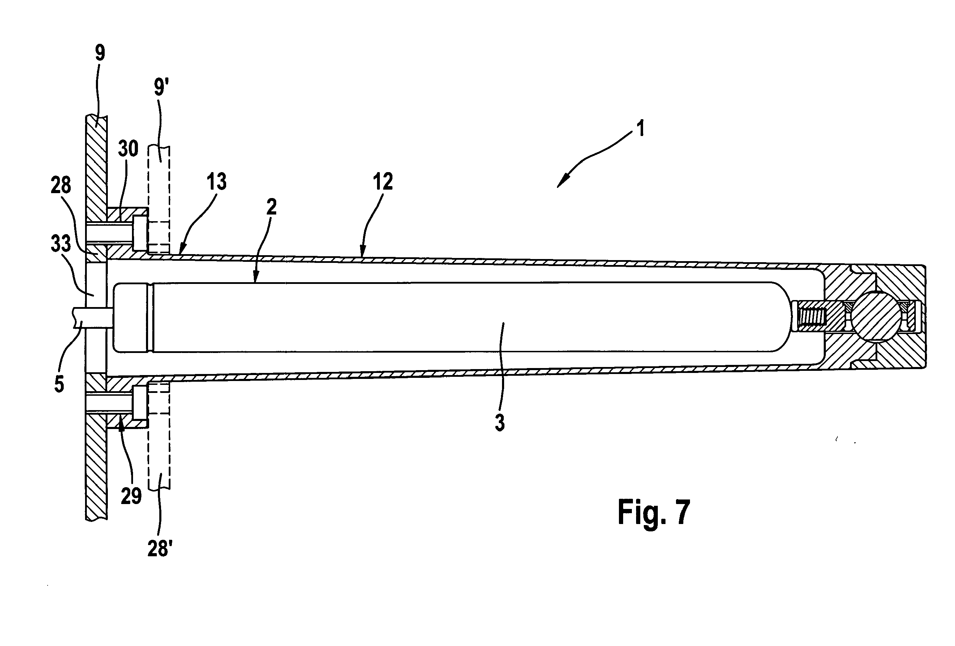

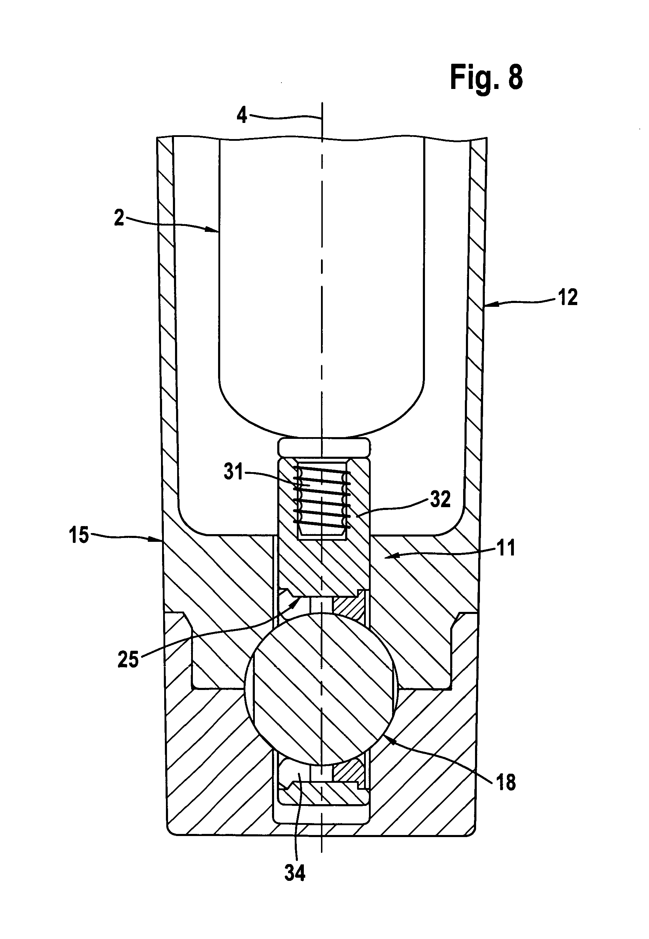

Eine ähnliche Verstelleinrichtung 1 mit einer einen Zylinder 3 und eine Kolbenstange 5 aufweisenden Kolbenzylindereinheit 2 ist in Figuren 7, 8 dargestellt. In Figur 7 ist mit durchgezogener Linie ein Abschnitt einer Stirnseite 28 einer Tür 9 eines Kraftfahrzeuges dargestellt, an der eine Konsole 12 in einem ersten Konsolenendbereich 13 von der Innenseite der Tür 9 her befestigbar, vorzugsweise anschraubbar, ist. Dazu ist in dem ersten Konsolenendbereich 13 eine Verbindungseinrichtung 29 mit Durchgangsausnehmungen 30 zur Aufnahme von Schrauben vorgesehen. Eine Fixierung der Konsole 12 in der Tür 9 erfolgt mithilfe von zwei Schrauben, die bei der Montage in die Durchgangsausnehmungen 30 der Konsole 12 gesteckt und mit einer Schnappverbindung oder mit einem Engpaß an einem jeweiligen zylindrischen Teil der Schrauben gegen Herausfallen sowie mittels Formschlusses gegen Verdrehen gesichert werden. Die Kolbenstange 5 durchgreift die Stirnseite 28 der Tür 9 durch eine in der Stirnseite 28 angeordnete Ausnehmung 33. Bei einer vorgenannten Montage der Konsole 12 von innen wird die maximale Belastung in Zugrichtung von der Konsole 12 aufgenommen und an die Tür 9 weitergeleitet; Verbindungselemente, hier insbesondere Schrauben, zwischen Konsole 12 und Tür 9 werden minimal belastet.

Als alternative Möglichkeit zur Anbringung der Konsole 12 an einer Tür 9' eines Kraftfahrzeuges ist mit gestrichelter Linie ein Abschnitt einer Stirnseite 28' der Tür 9' des Kraftfahrzeuges dargestellt, wobei die Konsole 12 von außen an die Stirnseite 28' angesetzt ist. Bei einer solchen Ausführungsform, bei der die Konsole 12 von außen in die Tür 9' eingesetzt ist, entsteht an Verbindungselementen, insbesondere Schrauben, zwischen Konsole 12 und Tür 9' in Zugrichtung maximale Belastung.

Figur 8 läßt erkennen, daß ein zylinderseitiges Anschlußelement 11 der Kolbenzylindereinheit 2 einen stirnseitig auf dem Zylinder 3 angebrachten, vorzugsweise angeschweißten, Gewindebolzen 31 aufweist. Auf den Gewindebolzen 31 ist ein ein Gelenkauge 25 aufweisendes Anschlußstück 32 aufgeschraubt. In dem Gelenkauge 25 ist ein Kugelelement 18 zur Anbindung der Konsole 12 an die Kolbenzylindereinheit 2 angeordnet, wobei in das Gelenkauge 25 eingesetzte Lagerschalen 34 das Kugelelement 18 haltern. Bei einer Bewegung der Tür, das heißt bei einem Öffnen oder Schließen der Tür, vollzieht die Kolbenzylindereinheit 2 eine leichte Schwenkbewegung, welche durch das Kugelelement 18 ermöglicht wird. Sowohl der Gewindebolzen 19 in dem Ausführungsbeispiel nach Figuren 1 bis 3 als auch das jeweilige Gelenkauge 25 in den Ausführungsbeispielen nach Figuren 4 bis 8 durchgreift den jeweils korrespondierenden Konsolenendbereich 15 zentrisch, das heißt in Richtung der Mittelachse 4 der Kolbenzylindereinheit 2.

### Bezuciszeichenliste

- 1: Verstelleinrichtung
- 2: Kolbenzylindereinheit
- 3: Zylinder
- 4: Mittelachse
- 5: Kolbenstange
- 6: Bauelement
- 7: Bauelement
- 8: Karosserie
- 9: Tür
- 9': Tür
- 10: Anschlußelement
- 11: Anschlußelement
- 12: Konsole
- 13: Konsolenbereich
- 14: Schraubverbindung
- 15: Konsolenbereich
- 16: Hohlkörper
- 17: Boden
- 18: Kugelelement
- 19: Gewindebolzen
- 20: Kugel
- 21: Ausnehmung
- 22: Ausnehmung
- 23: Deckel
- 24: Ausnehmung
- 25: Gelenkauge
- 26: Lagerbuchse
- 27: Vollkugel
- 28: Stirnseite
- 28': Stirnseite
- 29: Verbindungseinrichtung
- 30: Durchgangsausnehmung
- 31: Gewindebolzen
- 32: Anschlußstück
- 33: Ausnehmung
- 34: Lagerschale

## Patentansprüche

1. Stufenlos blockierbare Verstelleinrichtung zum Feststellen zweier relativ zueinander bewegbarer Bauelemente, insbesondere einer relativ zu einer Karosserie eines Kraftfahrzeuges bewegbaren Tür oder Klappe des Kraftfahrzeuges, mit einer einen Zylinder und einen in dem Zylinder axial verschiebbaren, eine aus dem Zylinder herausgeführte Kolbenstange aufweisenden Kolben besitzenden Kolbenzylindereinheit, wobei die Kolbenzylindereinheit ein kolbenstangenseitiges Anschlußelement zur Verbindung mit einem ersten der Bauelemente und ein zylinderseitiges Anschlußelement zur Verbindung mit dem zweiten der Bauelemente aufweist, **dadurch gekennzeichnet , daß** eine die Kolbenzylindereinheit (2) axial zumindest teilweise übergreifende Konsole (12) vorgesehen ist und daß die Konsole (12) in einem ersten Konsolenendbereich (13) an einem der beiden Bauelemente (6) befestigbar und in einem dem ersten Konsolenendbereich (13) abgewandten zweiten Konsolenendbereich (15) an das kolbenstangenseitige Anschlußelement oder das zylinderseitige Anschlußelement (11) der Kolbenzylindereinheit (2) angebunden ist.

2. Verstelleinrichtung nach Anspruch 1, **dadurch gekennzeichnet , daß** die Konsole (12) einen starren, die Kolbenzylindereinheit (2) zumindest teilweise umgreifenden Hohlkörper (16) aufweist.

3. Verstelleinrichtung nach Anspruch 2, **dadurch gekennzeichnet , daß** der Hohlkörper (16) als Topf ausgebildet ist und daß der zweite Konsolenendbereich (15) den Boden (17) des Topfes umfaßt.

4. Verstelleinrichtung nach einem der Ansprüche 2 und 3, **dadurch gekennzeichnet , daß** der Hohlkörper (16) einen sich ausgehend von dem zweiten Konsolenendbereich (15) zu dem ersten Konsolenendbereich (13) hin erweiternden Konus aufweist.

5. Verstelleinrichtung nach einem der vorhergehenden Ansprüche, **dadurch gekennzeichnet , daß** die Konsole (12) aus einem Kunststoff besteht.

6. Verstelleinrichtung nach einem der vorhergehenden Ansprüche, **dadurch gekennzeichnet , daß** in dem ersten Konsolenendbereich (13) eine Verbindungseinrichtung (29) für eine Schraubbefestigung der Konsole (12) vorgesehen ist.

7. Verstelleinrichtung nach einem der vorhergehenden Ansprüche, **dadurch gekennzeichnet , daß** das die Konsole (12) anbindende Anschlußelement (11) der Kolbenzylindereinheit (2) ein Kugelelement (18) aufweist.

8. Verstelleinrichtung nach Anspruch 7, **dadurch gekennzeichnet , daß** in dem zweiten Konsolenendbereich (15) eine das Kugelelement (18) lagernde kalottenförmige Ausnehmung (22) vorgesehen ist.

9. Verstelleinrichtung nach einem der Ansprüche 7 und 8, **dadurch gekennzeichnet , daß** der zweite Konsolenendbereich (15) mit einem das Kugelelement (18) abdeckenden Deckel (23) verbunden ist.

10. Verstelleinrichtung nach Anspruch 9, **dadurch gekennzeichnet , daß** der Deckel (23) eine das Kugelelement (18) lagernde kalottenförmige Ausnehmung (24) aufweist.

11. Verstelleinrichtung nach einem der Ansprüche 7 bis 10, **dadurch gekennzeichnet, daß** das die Konsole (12) anbindende Anschlußelement (11) einen axial ausgerichteten Gewindebolzen (19) aufweist und daß das Kugelelement (18) mit dem Gewindebolzen (19) verschraubt ist.

12. Verstelleinrichtung nach einem der Ansprüche 7 bis 10, **dadurch gekennzeichnet , daß** das die Konsole (12) anbindende Anschlußelement (11) ein Gelenkauge (25) aufweist und daß das Kugelelement (18) in dem Gelenkauge (25) angeordnet ist.

13. Verstelleinrichtung nach Anspruch 12, **dadurch gekennzeichnet , daß** das Gelenkauge (25) eine Lagerbuchse (26) zur Lagerung des Kugelelementes (18) aufweist.

14. Verstelleinrichtung nach einem der Ansprüche 12 und 13, **dadurch gekennzeichnet, daß** das Kugelelement (18) mittels eines Klipsbauteiles in dem Gelenkauge (25) befestigt ist.

15. Verstelleinrichtung nach einem der Ansprüche 11 bis 14, **dadurch gekennzeichnet , daß** der Gewindebolzen (19) oder das Gelenkauge (25) den zweiten Konsolenendbereich (15) zentrisch durchgreift.

16. Verstelleinrichtung nach einem der vorhergehenden Ansprüche, **dadurch gekennzeichnet , daß** der erste Konsolenendbereich (13) an einer Stirnseite (28; 28') einer Tür (9; 9') eines Kraftfahrzeuges befestigbar ist, daß der zweite Konsolenendbereich (15) an das zylinderseitige Anschlußelement (11) der Kolbenzylindereinheit (2) angebunden ist und daß das kolbenstangenseitige Anschlußelement (10) der Kolbenzylindereinheit (2) mit der Karosserie des Kraftfahrzeuges verbindbar ist, wobei die Kolbenstange (5) die Stirnseite (28; 28') der Tür (9; 9') durchgreift.
